# EUROPÄISCHE PATENTANMELDUNG

(11) **EP 2 856 966 A1**
(43) Veröffentlichungstag der Anmeldung: **08.04.2015**
(21) Anmeldenummer: 13405116.8
(22) Anmeldetag: 04.10.2013
(51) Int. Cl.: A61C 8/00

(54) **Elastisches Zahnimplantat**

(71) Anmelder: Ceramics Solutions AG, 8002 Zürich (CH)
(72) Erfinder: König, Arno, 8044 Zürich (CH)
(74) Vertreter: EGLI-EUROPEAN PATENT ATTORNEYS

(57) **Zusammenfassung**

Die Erfindung betrifft eine Implantatvorrichtung (1), mit einem Verankerungsbereich (2) zur Verankerung der Implantatvorrichtung (1) in einem Knochen, sowie mit einem Kopfteilbereich (3). Die Verbindungseinrichtung (4) ist derart ausgebildet und eingerichtet, dass Kopfteilbereich (3) und Verankerungsbereich (2) der Implantatvorrichtung (1) reversibel und elastisch gegeneinander verschwenkbar sind.

## Beschreibung

Die Erfindung betrifft eine Implantatvorrichtung mit zumindest einem Verankerungsbereich zur Verankerung der Implantatvorrichtung in einem Knochen sowie mit zumindest einem Kopfteilbereich.

Im medizinischen Bereich, speziell im zahnmedizinischen Bereich, hat die Verwendung von Implantaten in den letzten Jahren und Jahrzehnten sprunghaft zugenommen. Dies hängt insbesondere auch mit der Verfügbarkeit neuartiger Materialien sowie dem besseren Verständnis der Wechselwirkung zwischen organischem Gewebe und neuen bzw. bekannten Materialien zusammen.

Um beim Beispiel der Zahnmedizin zu bleiben, muss das Implantat eine Reihe von unterschiedlichen Eigenschaften erfüllen. Der eigentliche Implantatkörper (also der Bereich, der in den betreffenden Knochen eingesetzt wird) muss beispielsweise gut und fest (vorzugsweise auch möglichst schnell) einwachsen, damit das Zahnimplantat nach einer überschaubaren Zeitspanne belastet werden kann. Fachsprachlich spricht man davon, dass der eigentliche Implantatkörper eine möglichst gute Osseointegration ermöglichen muss.

Der sichtbare Teil des Implantats muss nicht nur ausreichend stabil sein, sondern darüber hinaus auch ästhetischen Anforderungen genügen und dem Aussehen eines natürlichen Zahns möglichst nahekommen. Dabei ist darauf zu achten, dass im zahnmedizinischen Bereich der "Wechsel" zwischen diesen beiden unterschiedlichen Anforderungen auf vergleichsweise kurzen Distanzen erfolgt. So deckt das Zahnfleisch (der Zahnfleischwulst) nur einen kleinen Bereich von typischerweise 0,5 mm bis maximal 1 mm "ausserhalb" des Kieferbereichs optisch ab. Speziell im Schneidezahnbereich können daher aus ästhetischen Erwägungen heraus nur minimale Toleranzen geduldet werden.

Da die unterschiedlichen Bereiche eines Zahnimplantats unterschiedliche Erfordernisse erfüllen müssen, verwendete man bislang traditionellerweise (und verwendet diese nach wie vor) zwei- bzw. mehrteilige Implantate, bei denen der eigentliche, im Kiefer zu implantierende Implantatkörper getrennt vom in die Mundhöhle ragenden Bereich ausgebildet ist. Ein derartiger Aufbau hat darüber hinaus auch gewisse medizinische Vorteile, da nach der Implantation des Implantatkörpers das betreffende Zahnfach zugenäht werden kann und der Implantatkörper belastungsfrei festwachsen kann. Lediglich der Vollständigkeit halber wird darauf hingewiesen, dass der in die Mundhöhle ragende Teil des Zahnimplantats (der typischerweise Kopfteilbereich bzw. vom Englischen herkommend "Abutment" genannt wird) in aller Regel keine Zahnform aufweist. Der betreffende Kopfteilbereich wird vielmehr prothetisch mit einer Zahnkrone versorgt.

Ein nach wie vor ungelöstes Problem bei Zahnimplantaten ist der Tragekomfort. So wird es von vielen Patienten als störend, zumindest jedoch als gewöhnungsbedürftig empfunden, dass sich ein Implantat sehr "hart" anfühlt. Dies rührt von der festen Verbindung zwischen Implantatkörper und Knochen her. Dies stellt einen Unterschied zu einem natürlichen Zahn dar, da die Aufhängung der Zahnwurzel im Zahnfach bis zu einem gewissen Grad elastisch ist.

Ein weiteres Problem stellt die hohe Kraftbelastung dar, die auf ein Implantat bzw. auf eine auf einem Implantat befestigte Zahnkrone einwirkt, wenn man auf einen sehr harten Gegenstand (beispielsweise einen Stein oder ein Stück Knochen) beisst. Hierbei kann es zu sehr hohen Kraftspitzen kommen. Speziell dann, wenn vergleichsweise spröde Materialien zum Einsatz kommen, kann dies zu einer Beschädigung von Implantat und/oder Krone kommen. Dies stellt insbesondere bei Keramikimplantaten bzw. bei Keramikkronen ein Problem dar. Denn hier wäre eine gewisse Elastizität des Implantats, insbesondere im Hinblick auf die Bruchfestigkeit von Implantat und Zahnkrone, vorteilhaft.

Die Aufgabe der Erfindung besteht somit darin, eine Implantatvorrichtung vorzuschlagen, welche gegenüber Implantatvorrichtungen, wie sie im Stand der Technik bekannt sind, verbessert ist.

Die Erfindung löst die Aufgabe.

Es wird vorgeschlagen, eine Implantatvorrichtung, die zumindest einen Verankerungsbereich zur Verankerung der Implantatvorrichtung in einem Knochen sowie zumindest einen Kopfteilbereich aufweist, mit einer Verbindungseinrichtung zu versehen, die derart ausgebildet und eingerichtet ist, dass Kopfteilbereich und Verankerungsbereich der Implantatvorrichtung reversibel und elastisch gegeneinander verschwenkbar sind. Obgleich der vorgeschlagene Aufbau für im Wesentlichen beliebige Implantate denkbar ist, so ist die Implantatvorrichtung insbesondere als Zahnimplantatvorrichtung geeignet. Es ist möglich, dass die Implantatvorrichtung zumindest zum Teil einteilig ausgebildet ist, dass also der Verankerungsbereich integral mit dem Kopfteilbereich und/oder der Verbindungseinrichtung ausgebildet ist, bzw. dass der Kopfteilbereich integral mit der Verbindungseinrichtung und/oder dem Verankerungsbereich ausgebildet ist. Ebenso ist es jedoch möglich, dass die Implantatvorrichtung, insbesondere Verankerungsbereich, Kopfteilbereich und/oder Verbindungseinrichtung, getrennt voneinander ausgebildet sind und beispielsweise erst zu einem späteren Zeitpunkt, wie beispielsweise beim oder nach dem Implantieren bzw. zu einem noch späteren Zeitpunkt (zum Beispiel Eröffnungszeitpunkt; Aufsetzen der Krone oder dergleichen) miteinander verbunden werden. Die Verbindungseinrichtung kann vorzugsweise als gesonderte Baugruppe zum Verankerungsbereich und/oder zum Kopfteilbereich ausgebildet sein (also nicht einstückig). Das schliesst es jedoch nicht aus, dass die Implantatvorrichtung dennoch als einteilige Implantatvorrichtung vorliegt. In einem derartigen Fall können die einzelnen Baugruppen beispielsweise bereits bei der Herstellung der Implantatvorrichtung zusammengefügt werden. Wesentlich ist, dass Kopfteilbereich und Verankerungsbereich mittels der Verbindungseinrichtung elastisch gegeneinander verschwenkbar sind. Das heisst, dass Kopfteilbereich und Verankerungsbereich unter Einwirkung einer Belastung sich gegeneinander bewegen können. Aufgrund der reversiblen und elastischen Verschwenkung kehren jedoch Kopfteilbereich und Verankerungsbereich nach dem Wegfall der Belastung in aller Regel wieder in Richtung des Ursprungszustands zurück, vorzugsweise im Wesentlichen vollständig in Richtung des Ursprungszustands zurück. Die Verschwenkbarkeit kann dabei insbesondere translatorische und/oder biegeartige und/oder torsionsartige Bewegungskomponenten umfassen. Eine Komponente einer Biegbarkeit (dabei wird üblicherweise der "Auslenkungswinkel" zwischen der Längsachse des Kopfteilbereichs und der Längsachse des Verankerungsbereichs zur Definition herangezogen) kann insbesondere ein Intervall zwischen 0° und 0,5°, 1,0°, 1,5°, 2,0°, 2,5°, 3,0°, 3,5°, 4,0°, 4,5° und 5,0° umfassen. Insbesondere die Obergrenze der Biegbarkeit kann dahingehend definiert sein, dass es zu keinen irreversiblen Verbiegungen und/oder zu Materialschädigungen von zumindest Teilen der Implantatvorrichtung kommt. Eine Längenänderungskomponente kann im Bereich von bis zu 0,1 mm, 0,2 mm, 0,3 mm, 0,4 mm, 0,5 mm, 0,6 mm, 0,7 mm, 0,8 mm, 0,9 mm oder 1,0 mm liegen. Auch hier gilt in Bezug auf die Obergrenze das im Zusammenhang mit der Biegbarkeit Gesagte. Auch eine Torsionskomponente (also eine Verdrehung der Implantatvorrichtung "in sich" längs der Längsachse von Kopfteilbereich und Verankerungsbereich relativ zueinander) kann Werte aufweisen, wie sie im Zusammenhang mit der Komponente der Biegbarkeit genannt wurden. Selbstverständlich können auch zwei oder drei Bewegungskomponenten gleichzeitig in Kombination erfolgen.

Bevorzugt ist es, wenn bei der Implantatvorrichtung die Verbindungseinrichtung derart ausgebildet und eingerichtet ist, dass die Implantatvorrichtung in einem unbelasteten Zustand in eine definierte Position zurückkehrt. Dies gilt insbesondere auch nach dem Wegfall einer erfolgten Krafteinwirkung. Dies entspricht dem "üblichen Verhalten" eines natürlichen Zahns. Der Tragekomfort der Implantatvorrichtung kann dadurch besonders hoch sein.

Insbesondere wird vorgeschlagen, die Implantatvorrichtung derart auszubilden, dass die Verschwenkbewegung zumindest bereichsweise eine kombinierte Biegebewegung und Längenänderungsbewegung darstellt. Unter "bereichsweise" ist insbesondere ein gewisser Bereich der Belastung zu verstehen. Dies kann sich sowohl auf die Krafteinwirkung (beispielsweise in Newton oder in Newtonmeter (Drehmoment) gemessen) als auch auf die Richtung der Krafteinwirkung beziehen. Es ist also möglich, dass bei der vorgeschlagenen Implantatvorrichtung bei beginnender Belastung zunächst eine gleichzeitige Längenänderung und Biegebewegung erfolgt und zu einem späteren Zeitpunkt beispielsweise lediglich eine Biegebewegung erfolgt. Die Biegebewegung bzw. Längenänderungsbewegung bezieht sich dabei insbesondere auf die Lage von Kopfteilbereich und Verankerungsbereich zueinander. Möglich ist es jedoch auch, dass über im Wesentlichen den gesamten Verschwenkweg hinweg, eine kombinierte Biegebewegung und Längenänderungsbewegung erfolgt. Die vorgeschlagene Ausbildung ist insbesondere deshalb von Vorteil, weil hierdurch ein in der Regel vergleichsweise einfacher, haltbarer und stabiler Aufbau realisiert werden kann.

Insbesondere wird vorgeschlagen, die Implantatvorrichtung derart auszubilden, dass die Verbindungseinrichtung zumindest eine Zugelementeinrichtung aufweist, insbesondere eine als Zugstangeneinrichtung und/oder eine als Schraubeneinrichtung ausgebildete Zugelementeinrichtung. Die Zugelementeinrichtung kann dabei als eine Art Zuganker genutzt werden. Diese wird bei einer Belastung der Implantatvorrichtung aufgrund des Aufbaus der Implantatvorrichtung (zumindest bei einem Grossteil der möglichen Belastungsrichtungen und/oder Belastungsstärken) auf Zug belastet. Eine derartige Belastung kann sich als vorteilhaft erweisen, da hierdurch meist lange Standzeiten der Zugelementeinrichtung (und damit der Implantatvorrichtung) realisiert werden können. Darüber hinaus kann durch die Krafteinwirkung auf Zug insbesondere bei spröden Materialien (Keramikimplantate) eine zusätzliche Verfestigung von Teilen der Implantatvorrichtung realisiert werden. Dies erfolgt dabei genau in "dem Moment", in dem eine hohe Belastung eintritt und damit eine Stabilisierung der Implantatvorrichtung vonnöten ist. Eine Zugstangeneinrichtung kann dabei nach Art einer Niete mit zwei festen Kopfbereichen ausgebildet sein. Eine als Schraubeneinrichtung ausgebildete Zugelementeinrichtung kann an einer oder an beiden Seiten ein Schraubengewinde (wobei diese Bereiche mit einer Art Mutter versehen werden können) aufweisen. Ein grosser Vorteil bei einer Schraubeneinrichtung ist, dass die Schraubeneinrichtung beispielsweise zur (zu einem späteren Zeitpunkt erfolgenden) Befestigung eines "getrennt ausgebildeten" Kopfteilbereichs am Verankerungsbereich der Implantatvorrichtung benutzt werden kann (mehrteilige Implantate).

Eine vorteilhafte Ausbildung der Implantatvorrichtung kann sich insbesondere dann ergeben, wenn die Verbindungseinrichtung, insbesondere die Zugelementeinrichtung, in einem Neutralzustand im Wesentlichen unbelastet ist. Hierdurch kann eine Dauerbelastung der Verbindungseinrichtung (auch dann, wenn keine Belastung des Implantats durch Kaubewegungen oder dergleichen vorliegt) verhindert werden, wodurch sich die Standzeit der Implantatvorrichtung erhöhen kann.

Eine weitere vorteilhafte Ausbildungsmöglichkeit der Implantatvorrichtung kann sich ergeben, wenn die Verbindungseinrichtung zumindest eine Biegeelementeinrichtung aufweist, insbesondere zumindest eine Biegestangeneinrichtung. Mit einer derartigen Biegeelementeinrichtung kann ebenfalls eine Implantatvorrichtung mit Vorteilen, insbesondere bei Belastungsspitzen und hinsichtlich des Tragekomforts erzielt werden. Hierbei kommt es jedoch im Wesentlichen ausschliesslich zu einer Drehbewegung ohne (signifikante) Längenänderungen und/oder Torsionsbewegungen. Dies gilt insbesondere über bestimmte Belastungsbereiche hinweg.

Weiterhin wird vorgeschlagen, die Implantatvorrichtung derart auszubilden, dass zumindest Teile einer Verbindungseinrichtung, insbesondere eine Zugelementeinrichtung, eine Zugstangeneinrichtung, eine Schraubeneinrichtung, eine Biegeelementeinrichtung und/oder eine Biegestangeneinrichtung, als verbindbare, insbesondere als reversibel verbindbare Einrichtung ausgebildet sind. Auf diese Weise kann auf vorteilhafte Weise eine mehrteilige Implantatvorrichtung realisiert werden. Diese kann sich insbesondere hinsichtlich der Einheilphase als vorteilhaft erweisen. Wenn eine reversible Verbindbarkeit gegeben ist, kann die Verbindungseinrichtung gegebenenfalls auch ausgetauscht werden, falls diese aufgrund einer Überbelastung oder aufgrund von Materialermüdung (längere Tragezeit des Implantats, beispielsweise über einige Jahrzehnte hinweg) gewechselt werden soll/muss. Ein Austausch kann insbesondere derart erfolgen, dass der Verankerungsbereich im Patienten verbleiben kann. Dies kann sich als besonders vorteilhaft erweisen. Zusätzlich oder alternativ ist es jedoch ebenso möglich, dass zumindest Teile einer Verbindungseinrichtung (insbesondere die oben genannten Elemente) als ab Werk bereits verbundene Einrichtungen ausgebildet sind. Dementsprechend ist der Begriff "verbindbar" in der Regel in Bezug auf den Arzt (Zahnarzt), der den Eingriff durchführt, zu verstehen.

Weiterhin kann es sich als vorteilhaft erweisen, wenn sich bei der Implantatvorrichtung der Kopfteilbereich und der Verankerungsbereich zumindest bereichsweise aufeinander abstützen, insbesondere flächenartig aufeinander abstützen. Hierdurch kann ein besonders einfacher und vorteilhafter Aufbau der Implantatvorrichtung realisiert werden. Das Abstützen kann dabei auch durch eine Art "aufeinander Abrollen" von Teilen (insbesondere im Kontaktbereich) von Kopfteilbereich und Verankerungsbereich realisiert werden. Ein derartiges Abstützen kann beispielsweise in Form von zwei formkomplementär zueinander ausgebildeten Oberflächenbereichen (beispielsweise zwei ringartig ausgebildete Bereiche, die einander gegenüber liegen) realisiert sein.

Vorteilhaft ist es insbesondere, wenn bei der Implantatvorrichtung der Kopfteilbereich und der Verankerungsbereich zumindest bereichsweise hülsenartig bzw. koaxial ineinandergreifen. Auf diese Weise kann beispielsweise ein "gegeneinander Abrutschen" wirksam unterbunden werden. Ein weiterer Vorteil kann darin bestehen, dass durch den vorgeschlagenen Aufbau, auch während einer Belastung, ästhetischen Anforderungen besonders effektiv genügt werden kann. Gerade wenn Kopfteilbereich und/oder Verankerungsbereich aus einem im Wesentlichen zahnfarbenen Material gefertigt sind, kann ein "Hervorblitzen" einer Verbindungseinrichtung (die in der Regel aus einem metallischen Material gefertigt ist und damit nicht zahnfarben ausgebildet ist) vermieden werden.

Eine weitere vorteilhafte Weiterbildung der Implantatvorrichtung ergibt sich, wenn zumindest Teile der Implantatvorrichtung, insbesondere Kopfteilbereich und Verankerungsbereich, ein Spiel gegeneinander aufweisen, insbesondere auch in einem Ruhezustand der Implantatvorrichtung ein Spiel gegeneinander aufweisen. Auf diese Weise kann besonders einfach eine Verschwenkbewegung von Kopfteilbereich und Verankerungsbereich gegeneinander ermöglicht werden, ohne dass es zu Materialschädigungen bei der Implantatvorrichtung kommt und/oder dass ein besonders komplexer Aufbau hierfür erforderlich wäre.

Besonders vorteilhaft ist es, wenn zumindest Teile der Implantatvorrichtung, insbesondere der Kopfteilbereich und der Verankerungsbereich zumindest teilweise ein keramisches Material, insbesondere Zirkoniumdioxid, aufweisen. Keramische Materialien haben sich hinsichtlich der Osseointegration als besonders förderlich erwiesen. Dementsprechend ist eine Verwendung in einem Verankerungsbereich besonders sinnvoll. Aufgrund der hohen Standzeit von keramischen Materialien ist aber ebenso eine Verwendung derartiger Materialien im Bereich des Kopfteils sinnvoll. Darüber hinaus sind keramische Materialien zumindest im Wesentlichen zahnfarben. Dementsprechend führt eine "Erkennbarkeit von aussen" zu keinem störenden ästhetischen Eindruck.

Besonders vorteilhaft ist es, wenn zumindest Teile der Implantatvorrichtung, insbesondere solche Teile, die ein keramisches Material aufweisen, zumindest bereichsweise abgerundete Kantenbereiche aufweisen. In einem solchen Fall können sehr hohe Kraftspitzen im Kantenbereich, die auch zu Materialschädigungen führen könnten, wirksam verhindert werden. Dies gilt insbesondere dann, wenn in den betreffenden Bereichen eine Art "Abrollbewegung" beim "Gebrauch" auftritt.

Weiterhin ist es besonders vorteilhaft, wenn bei der Implantatvorrichtung zumindest Teile der Implantatvorrichtung, insbesondere zumindest Teile der Verbindungseinrichtung, ein metallisches Material aufweisen, insbesondere Eisen, eine Eisenlegierung, Stahl, Titan und/oder eine Titanlegierung. Derartige Materialien haben sich hinsichtlich einer reversiblen Verformbarkeit als besonders vorteilhaft erwiesen. Dementsprechend können sich diese unter Belastung reversibel verformen (beispielsweise sich dehnen, sich verbiegen und/oder sich verdrehen) und sich nach dem Ende der Belastung in ihren Ursprungszustand zurückbewegen.

Vorteilhaft ist es weiterhin, wenn bei der Implantatvorrichtung zumindest Teile der Implantatvorrichtung zumindest ein Schraubengewinde aufweisen. Dies kann sich einerseits als vorteilhaft zur Verankerung der Implantatvorrichtung in einem Knochen erweisen (beispielsweise Aussengewinde beim Verankerungsbereich der Implantatvorrichtung). Ebenso ist es jedoch möglich, dass derartige Verbindungen zur Verbindung von Teilen der Implantatvorrichtung "untereinander" verwendet werden. Hierbei ist insbesondere an Innengewinde im Kopfteilbereich und/oder im Verankerungsbereich sowie an Aussengewinde bei einer Verbindungseinrichtung zu denken. Insbesondere sollten die betreffenden Aussengewinde der Verbindungseinrichtung und die Innengewinde im Kopfteilbereich und/oder Verankerungsbereich zueinander korrespondierend ausgebildet sein.

Bevorzugt ist es weiterhin, wenn die Implantatvorrichtung (insbesondere der Kopfteilbereich, der Verankerungsbereich und/oder die Verbindungseinrichtung der Implantatvorrichtung) zumindest eine Verdrehsicherung aufweist. Diese kann insbesondere der Verhinderung einer Verdrehung von Kopfteilbereich und Verankerungsbereich gegeneinander dienen. Eine derartige Vorrichtung ist insbesondere bei einer mehrteiligen Implantatvorrichtung besonders sinnvoll. Hierdurch können unerwünschte und unangenehme Fehlstellungen durch eine Verdrehung von Teilen der Implantatvorrichtung auf effektive Weise vermieden werden. Eine derartige Verdrehsicherung kann beispielsweise durch eine n-kantige Formgebung realisiert werden. Insbesondere ist hier an eine dreieckige, viereckige, fünfeckige, sechseckige, siebeneckige, achteckige, neuneckige oder zehneckige Formgebung zu denken. Darüber hinaus sind auch sternförmige Formgebungen (beispielsweise nach Art einer Torx-Verbindung) denkbar und gegebenenfalls auch von Vorteil.

Weitere Einzelheiten der Erfindung und insbesondere beispielhafte Ausführungsformen der vorgeschlagenen Vorrichtung und des vorgeschlagenen Verfahrens werden im Folgenden anhand der beigefügten Zeichnungen erläutert. Es zeigen:
- Fig. 1: ein Ausführungsbeispiel für eine Implantatvorrichtung im zusammengesetzten Zustand im schematischen Querschnitt;
- Fig. 2: den Verankerungsbereich der in Fig. 1 dargestellten Implantatvorrichtung im schematischen Querschnitt;
- Fig. 3: der in Fig. 2 dargestellten Verankerungsbereich in einer Draufsicht aus Richtung des Kontaktbereichs des Verankerungsbereich mit dem Kopfteil gesehen;
- Fig. 4: den Kopfteil des in Fig. 1 gezeigten Implantats in einem schematischen Querschnitt;
- Fig. 5: die Verbindungsschraube des in Fig. 1 dargestellten Implantats in einem schematischen Querschnitt;
- Fig. 6: das in Fig. 1 gezeigte Ausführungsbeispiel eines Implantats in einem belasteten Zustand im schematischen Querschnitt.

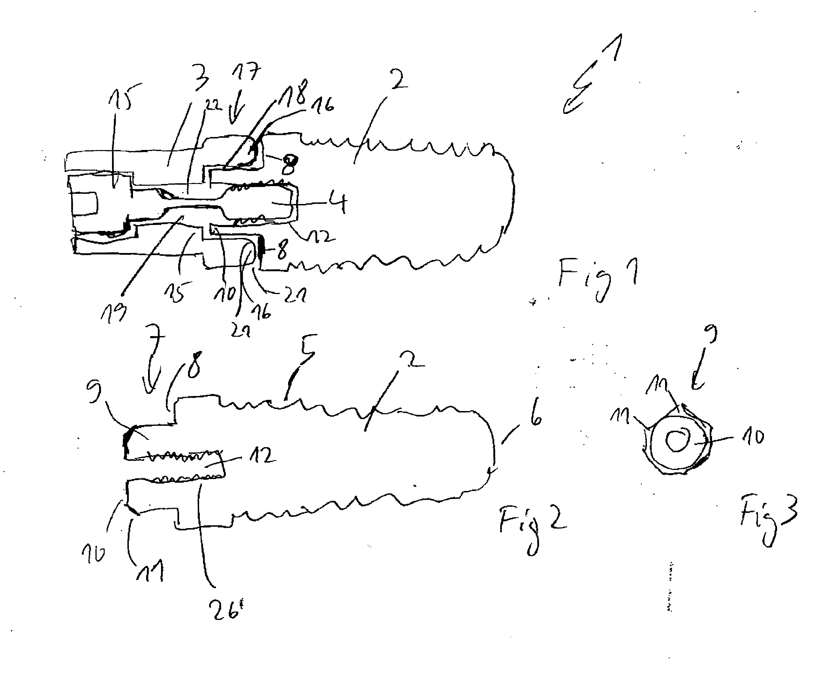

In Fig. 1 ist ein Zahnimplantat 1 in einem schematischen Querschnitt dargestellt. Das vorliegende Zahnimplantat 1 ("Implantatvorrichtung") ist als sogenanntes mehrteiliges Zahnimplantat 1 ausgebildet.

Das Zahnimplantat 1 weisst im Wesentlichen drei Elementen auf. Dies ist zunächst der eigentliche Implantatteil 2 (zum Teil auch als Implantatkörper bezeichnet; "Verankerungsbereich"), der in den Kiefer des Patienten eingesetzt wird und fest mit diesem verwächst. Weiterhin weist das Zahnimplantat 1 einen Kopfteil 3 auf (häufig auch fachsprachlich mit dem englischen Begriff "Abutment" bezeichnet; "Kopfteilbereich"), der als Befestigungsvorrichtung für eine Zahnkrone (nicht dargestellt) dient.

Implantatteil 2 und Kopfteil 3 sind über eine Schraube 4 ("Zugstangeneinrichtung" bzw. "Zugelementeinrichtung") miteinander verbunden.

Der in Fig. 2 näher dargestellte Implantatteil 2, besteht im vorliegenden Ausführungsbeispiel aus einem Zirkoniumdioxid-Material, mithin aus einem keramischen Material, mit dem eine gute Osseointegration in den Kiefer gewährleistet werden kann. Der Implantatteil 2 weist in an sich bekannter Weise in einem Bereich, der mit dem Kieferknochenmaterial in Berührung kommt, ein Aussengewinde 5 auf, sodass der Implantatteil 2 in einen entsprechend präparierten Kiefer eingeschraubt werden kann und auf diese Weise eine Vorfixierung während der Einheilphase ermöglicht wird. In einem dem Kiefer zugewandten Bereich des Implantatteils ist eine Abrundung 6 vorgesehen.

In einem im eingesetzten Zustand der Mundhöhle zugewandten Bereich des Implantatteils 2 ist ein abgestufter Schulterbereich 7 ausgebildet. Dieser Schulterbereich 7 besteht aus einer radial aussenliegenden Ringfläche 8 sowie einem vorstehenden zylindrischen Bereich 9, der an seinem äusseren Ende eine radial innenliegende Ringfläche 10 aufweist. Äussere Ringfläche 8 und innere Ringfläche 10 sind jeweils als ebene, weitgehend unstrukturierte Kontaktoberfläche ausgebildet. Der vorstehende zylindrische Bereich 9 ist im vorliegend dargestellten Ausführungsbeispiel als Sechskant ausgebildet (siehe Fig. 3). Auf diese Weise wird eine Verdrehsicherung gegenüber einer Verdrehung des Kopfteils 3 gegenüber dem Implantatteil 2 gewährleistet. In einem Aussenbereich der inneren Ringfläche 10, genauer im Bereich der Spitzen 11 des Sechskants, ist die plane Formgebung der inneren Ringfläche 10 aufgebrochen. Die entsprechende Fläche ist nämlich im Bereich der Spitzen 11 abgewinkelt. Vorliegend ist ein Winkel von etwa 20° gegenüber der Ebene gewählt.

Weiterhin ist darauf hinzuweisen, dass der zylindrische Bereich 9 an seiner Aussenseite nicht streng zylindrisch ausgebildet ist. Vielmehr verkleinert sich der Aussendurchmesser konusartig von 2,95 mm (im Bereich der äusseren Ringfläche 8) auf 2,62 mm (im Bereich der inneren Ringfläche 10). Der Aussendurchmesser des Implantatteils 2 ist vorliegend mit 4,5 mm Durchmesser gewählt (Aussendurchmesser; entspricht dem Bereich der aussenliegenden Gewindevorsprünge).

Weiterhin ist im Implantatteil 2 ein Sackloch 12 mit einem darin ausgebildeten Innengewinde 26 vorgesehen. Mittels des Innengewindes kann die Schraube 4 reversibel im Implantatteil 2 befestigt werden.

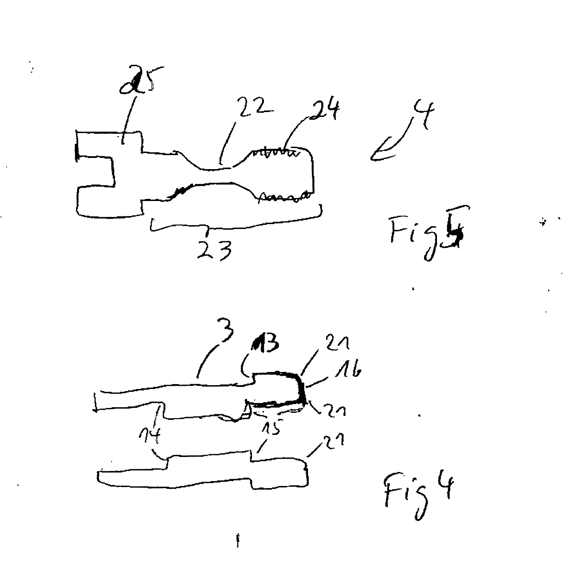

Der Kopfteil 3 (siehe auch Fig. 4) weist grob die Form eines Hohlzylinders auf, wobei sowohl die Aussenseite als auch die Innenseite jeweils mit Abstufungen versehen sind. Eine Abstufung 13 auf der (radialen) Aussenseite dient der Lagerung (Abstützung) einer Zahnkrone. Eine erste Abstufung 14 auf der Innenseite des Kopfteils 3 dient der Anlage des Kopfbereichs 25 der Schraube 4. Die zweite Abstufung 15 auf der Innenseite des Kopfteils 3 dient der Anlage an der inneren Ringfläche 10 des Implantatteils 2. Die Stirnfläche 16 des Kopfteils 3 (ist dem Implantatteil 2 und damit dem Kiefer zugewandt) tritt im zusammengefügten Zustand des Zahnimplantats 1 mit der äusseren Ringfläche 8 des Implantatteils 2 in Kontakt.

Im zusammengefügten Zustand des Zahnimplantats 1 werden Implantatteil 2 und Kopfteil 3 mithilfe der Schraube 4 zusammengehalten. Die Anordnungen von zweiter Abstufung 15 und Stirnfläche 16 des Kopfteils 3 einerseits und von äusserer Ringfläche 8 und innerer Ringfläche 10 des Implantatteils 2 andererseits sind so gewählt, dass in einem unbelasteten Zustand des Zahnimplantats 1 (unbelastet durch Kaubewegungen oder dergleichen) sowohl Stirnfläche 16 und äussere Ringfläche 8 als auch innere Ringfläche 10 und zweite Abstufung 15 bündig aneinanderliegen. Dagegen sind die radial aussenliegenden bzw. radial innenliegenden Bereiche von Kopfteil 3 und Implantatteil 2 in diesem Koaxialbereich 17 (entspricht beim Implantatteil 2 im Wesentlichen dem Schulterbereich 7) ist mit einem Spiel 18 versehen. Es existiert also ein radialer Abstand der betreffenden Flächen gegeneinander, der sich darüber hinaus aufgrund der leicht konischen Formgebung des Schulterbereichs 7 in Richtung vom Implantatteil 2 zum Kopfteil 3 hin leicht vergrössert.

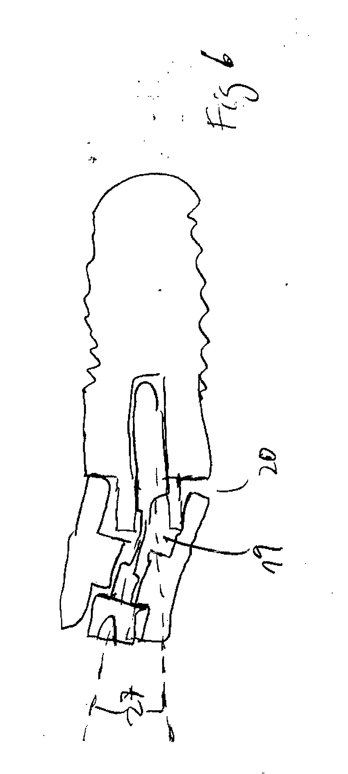

Aufgrund der beschriebenen Formgebung ist es möglich, dass es bei einer Belastung des Zahnimplantats 1 im eingesetzten Zustand (beispielsweise durch eine Kaubewegung verursacht; insbesondere eine Scherbelastung) zu einer Verschwenkbewegung des Kopfteils 3 gegenüber dem Implantatteil 2 kommen kann (siehe auch Fig. 6). Dabei erfolgt an einer Seite der Stirnfläche 16 des Kopfteils 3 eine Art "Abrollbewegung" der Stirnseite 16 auf der äusseren Ringfläche 8 des Implantatteils 2. Gleichzeitig kommt es zu einem Abheben der Stirnfläche 16 des Kopfteils 3 von der äusseren Ringfläche 8 des Implantatteils 2, im hierzu gegenüberliegenden Bereich. Eine sich hieraus ergebende Position, die zu einem Winkel 27 zwischen den Längsachsen des Kopfteils 3 und des Implantatteils 2 zueinander führt, ist in Fig. 6 in übertriebener Weise dargestellt. Typische Winkel 27, die bei normalen Kaubewegungen mit dem vorliegend dargestellten Zahnimplantat 1 realisiert werden können, liegen im Bereich von bis zu 3°. Dabei kann sich durchaus ein Spalt 20 von bis zu 0,5 mm zwischen äusserer Ringfläche 8 des Implantatteils 2 und Stirnseite 16 des Kopfteils 3 bilden. Dies führt in aller Regel dazu, dass Speisereste in den Innenraum 19 des Zahnimplantats 1 eindringen können. Da die einander gegenüberliegenden Flächen jedoch im unbelasteten Zustand bündig miteinander verschliessen ("geruchsdichter Abschluss"), ist dies unproblematisch. Insbesondere kommt es nicht zu einer Freisetzung von unangenehmen Gerüchen.

Da im vorliegenden Ausführungsbeispiel auch der Kopfteil 3 aus einem Zirkoniumdioxid-Material ausgeführt ist, sind die Seitenbereiche der Stirnfläche 16 mit Abrundungen 21 versehen. Hierdurch kann eine "Abrollbewegung" des Kopfteils 3 auf dem Implantatteil 2 realisiert werden. Darüber hinaus werden durch die Abrundungen 21 Kraftspitzen, die durchaus auch zu einer Beschädigung des Zahnimplantats 1 (insbesondere des Kopfteils 3) führen könnten, weitgehend verhindert.

Um die beschriebene Verschwenkbewegung zwischen Kopfteil 3 und Implantatteil 2 noch vorteilhafter zu gestalten, ist die Schraube 4, die vorliegend aus einer Titanlegierung gefertigt ist, über einen Teilbereich ihrer Länge hinweg mit einem Verjüngungsbereich 22 (siehe auch Fig. 5) versehen. Im konkret dargestellten Beispiel wird hierzu der Durchmesser des Stiftbereichs 23 der Schraube 15 im Verjüngungsbereich 22 dünner ausgeführt. Aufgrund des Verjüngungsbereichs 22 wird eine Verschwenkbewegung von Kopfteil 3 und Implantatteil 2 gegeneinander erleichtert, da einerseits die Kräfte, die für eine Längenausdehnung der Schraube 4 erforderlich sind, niedriger ausfallen und darüber hinaus eine Biegebewegung der Schraube 4 (insbesondere des Stiftteils 23 der Schraube 4) erleichtert wird. Selbstverständlich ist die Schraube 4 in einem Teilbereich des Stiftbereichs 23 mit einem Aussengewinde 24 versehen, welches in das Innengewinde 26 des Sacklochs 12 im Implantatteil 2 eingreifen kann.

Selbstverständlich sind auch andere Formgebungen der Schraube 4 möglich.

Im Übrigen ist es besonders vorteilhaft, wenn sich der Kontaktbereich zwischen zweiter Abstufung 15 des Kopfteils 3 und innerer Ringfläche 10 des Implantatteils 2 sowie der Verjüngungsbereich 22 der Schraube 4 zumindest teilweise auf einer im Wesentlichen gleichen "Längsposition" befinden. Die beschriebene Verschwenkbewegung von Kopfteil 3 und Implantatteil 2 des Zahnimplantats 1 kann hierdurch besonders vorteilhaft ermöglicht werden.

## Patentansprüche

1. Implantatvorrichtung (1), mit zumindest einem Verankerungsbereich (2) zur Verankerung der Implantatvorrichtung (1) in einem Knochen, sowie mit zumindest einem Kopfteilbereich (3),
**gekennzeichnet durch** eine Verbindungseinrichtung (4), die derart ausgebildet und eingerichtet ist, dass Kopfteilbereich (3) und Verankerungsbereich (2) der Implantatvorrichtung (1) reversibel und elastisch gegeneinander verschwenkbar sind.

2. Implantatvorrichtung (1) nach Anspruch 1, **dadurch gekennzeichnet, dass** die Verbindungseinrichtung (17) derart ausgebildet und eingerichtet ist, dass die Implantatvorrichtung (1) in einem unbelasteten Zustand in eine definierte Position zurückkehrt.

3. Implantatvorrichtung (1) nach Anspruch 1 oder 2, **dadurch gekennzeichnet, dass** die Verschwenkbewegung zumindest bereichsweise eine kombinierte Biegebewegung und Längenänderungsbewegung darstellt.

4. Implantatvorrichtung (1) nach einem der vorangehenden Ansprüche, insbesondere nach Anspruch 3, **dadurch gekennzeichnet, dass** die Verbindungseinrichtung (17) zumindest eine Zugelementeinrichtung (4) aufweist, insbesondere eine als Zugstangeneinrichtung und/oder als Schraubeneinrichtung ausgebildete Zugelementeinrichtung.

5. Implantatvorrichtung nach einem der vorangehenden Ansprüche, insbesondere nach Anspruch 4, **dadurch gekennzeichnet, dass** die Verbindungseinrichtung (17), insbesondere die Zugelementeinrichtung (4), in einem Neutralzustand im Wesentlichen unbelastet ist.

6. Implantatvorrichtung (1) nach einem der vorangehenden Ansprüche, **dadurch gekennzeichnet, dass** die Verbindungseinrichtung (17) zumindest eine Biegeelementeinrichtung (4, 22) aufweist, insbesondere zumindest eine Biegestangeneinrichtung.

7. Implantatvorrichtung (1) nach einem der vorangehenden Ansprüche, insbesondere nach einem der Ansprüche 4 bis 6, **dadurch gekennzeichnet, dass** zumindest Teile einer Verbindungseinrichtung (17), insbesondere eine Zugelementeinrichtung (4), eine Zugstangeneinrichtung, eine Schraubeneinrichtung, eine Biegeelementeinrichtung (4, 22) und/oder eine Biegestangeneinrichtung, als verbindbare, insbesondere als reversibel verbindbare Einrichtung ausgebildet sind.

8. Implantatvorrichtung (1) nach einem der vorangehenden Ansprüche, **dadurch gekennzeichnet, dass** sich der Kopfteilbereich (3) und der Verankerungsbereich (1) zumindest bereichsweise aufeinander abstützen, insbesondere flächenartig aufeinander abstützen (8, 10, 15, 16).

9. Implantatvorrichtung (1) nach einem der vorangehenden Ansprüche, insbesondere nach Anspruch 8, **dadurch gekennzeichnet, dass** der Kopfteilbereich (3) und der Verankerungsbereich (2) zumindest bereichsweise hülsenartig bzw. koaxial (17) ineinandergreifen.

10. Implantatvorrichtung (1) nach einem der vorangehenden Ansprüche, insbesondere nach Anspruch 9, **dadurch gekennzeichnet, dass** zumindest Teile der Implantatvorrichtung (1), insbesondere Kopfteilbereich (3) und Verankerungsbereich (2), ein Spiel (18) gegeneinander aufweisen, insbesondere auch in einem Ruhezustand der Implantatvorrichtung (1) ein Spiel (18) gegeneinander aufweisen.

11. Implantatvorrichtung (1) nach einem der vorangehenden Ansprüche, **dadurch gekennzeichnet, dass** zumindest Teile der Implantatvorrichtung (1), insbesondere der Kopfteilbereich (3) und der Verankerungsbereich (2) zumindest teilweise ein keramisches Material, insbesondere Zirkoniumdioxid, aufweisen.

12. Implantatvorrichtung (1) nach einem der vorangehenden Ansprüche, insbesondere nach Anspruch 11, **dadurch gekennzeichnet, dass** zumindest Teile der Implantatvorrichtung (1), insbesondere solche Teile, die ein keramisches Material aufweisen, zumindest bereichsweise abgerundete Kantenbereiche (21) aufweisen.

13. Implantatvorrichtung (1) nach einem der vorangehenden Ansprüche, **dadurch gekennzeichnet, dass** zumindest Teile der Implantatvorrichtung (1), insbesondere zumindest Teile (4) der Verbindungseinrichtung (17), ein metallisches Material aufweisen, insbesondere Eisen, eine Eisenlegierung, Stahl, Titan und oder/eine Titanlegierung.

14. Implantatvorrichtung (1) nach einem der vorangehenden Ansprüche, **dadurch gekennzeichnet, dass** zumindest Teile der Implantatvorrichtung (1) zumindest ein Schraubengewinde (5, 24, 26) aufweisen.

15. Implantatvorrichtung (1) nach einem der vorangehenden Ansprüche, **gekennzeichnet durch** zumindest eine Verdrehsicherung (9, 11).
